(19) Europäisches Patentamt

European Patent Office

Office européen des brevets

(11) EP 0 803 838 A2

(12) EUROPÄISCHE PATENTANMELDUNG

(43) Veröffentlichungstag:
29.10.1997 Patentblatt 1997/44

(51) Int. Cl.⁶: G06K 19/00

(21) Anmeldenummer: 97106353.2

(22) Anmeldetag: 17.04.1997

(84) Benannte Vertragsstaaten:
AT CH ES FR GB LI NL

(30) Priorität: 27.04.1996 DE 19616943

(71) Anmelder:
Venture Engineering Managementgesellschaft mbH
45468 Mülheim a.d. Ruhr (DE)

(72) Erfinder: Dietz, Christian
45470 Mülheim a.d. Ruhr (DE)

(74) Vertreter: Sparing - Röhl - Henseler
Patentanwälte
Rethelstrasse 123
40237 Düsseldorf (DE)

(54) **Vorrichtung und Verfahren zum Manipulieren eines Speicherbausteins**

(57) Die Erfindung schafft eine Adapter-Vorrichtung und ein Verfahren zum Manipulieren des Speicherbausteins (4) einer Chip-Karte (1). Der für den Zugriff auf die Chip-Karte (1) erforderliche Schlüssel ist nur in der Adapter-Vorrichtung (2) abgelegt, und Dritten unzugänglich gemacht. Hierdurch ist erstmals ermöglicht, daß eine unbegrenzt große Anzahl von Akzeptanzstellen eine Chip-Karte zum Abspeichern spezifischer Informationen nutzen kann, wobei weder hinzukommende Anbieter von dem Zugriff auf bestehende Chip-Karten ausgeschlossen werden noch Anbieter die Möglichkeit haben, Daten der Wettbewerber anzusehen oder zu manipulieren.

Fig. 1

# Beschreibung

Die vorliegende Erfindung betrifft eine Adapter-Vorrichtung und ein Verfahren zum Manipulieren des Speicherbausteins einer Chip-Karte, insbesondere zwecks Herstellung einer Datenaustausch-Verbindung.

Eine Vielzahl von Chip-Karten aus dem Stand der Technik benötigen jeweils angepaßte Vorrichtungen zum Kontaktieren derselben. Aus der Praxis sind Chip-Karten bekannt, die einen mit einer Karte verbundenen Speicherbaustein aufweisen, der über Kontaktierungsflächen kontaktierbar ist. Der Speicherbaustein für eine Telefonkarte beispielsweise umfaßt eine Anzahl Register, deren Belegung einen binären Zahlenwert wiedergibt, welcher die zur Verfügung stehenden Telefoneinheiten oder den entsprechenden Geldbetrag ausdrückt.

Chip-Karten werden ebenfalls für Bank-Dienstleistungen verwendet, wobei eine der Ausführungsformen schlagwortartig als "elektronische Geldbörse" bezeichnet wird. Mit einer derartigen Chip-Karte (oder Smart-Card) ist es möglich, einen bestimmten Geldbetrag an einer elektronischen "Tankstelle" auf-bzw. nachzuladen, der dann für die bargeldlose Bezahlung von Waren oder Dienstleistungen zur Verfügung steht. Wenn der geladene Geldbetrag verbraucht ist, ist die Geldbörse leer, und muß -wie bei dem nicht-elektronischen Namensgeber - zunächst wieder aufgefüllt werden. Zur Verbesserung der Akzeptanz von elektronischen Geldbörsen ist vorgeschlagen worden, neben der Funktion als elektronische Geldbörse für die Chip-Karte sogenannte Zusatzapplikationen vorzusehen, die in einem anderen Bereich innerhalb desselben Speicherbausteins auf reservierte Speicherplätze zugreifen.

Um einen gewissen Schutz gegen Mißbrauch zu gewährleisten wird vorgesehen, daß beim Aufladen der Chip-Karte, aber in der Regel nicht zum Bezahlen mit der Chip-Karte, eine sogenannte persönliche Identifikationsnummer (PIN) in ein Terminal eingegeben werden muß. Ein im Bank-Terminal integrierter Komparator vergleicht dann die eingegebene PIN mit einer in dem Speicherbaustein abgespeicherten Geheimzahl, wobei das Ergebnis des Vergleichs - ggf. neben weiteren Kriterien - über die Annahme oder Ablehnung der Transaktion entscheidet. Die Geheimzahl muß in einem geschützten Speicherbereich abgelegt sein, um zu verhindern, daß sie mit einer anderen, bekannten Zahl überschrieben wird oder unbefugt ausgelesen werden kann. Dieses Verfahren ist zum Schutz des Berechtigten für Transaktionen wie das Laden von Geld unabdingbar, jedoch auf Applikationen, bei denen die Akzeptanzstellen bzw. ihre Daten geschützt werden sollen, nicht praktisch übertragbar. Denn bei Kenntnis der Geheimzahl oder eines entsprechenden Schlüssels könnte jede Akzeptanzstelle auf jede Applikation zugreifen, was aber aus Gründen des gegenseitigen Schutzes der Wettbewerber und anderen Teilnehmer abzulehnen ist.

Ein verbessertes Verfahren bedient sich eines im Terminal vorgesehenen Sicherheits-Applikations-Moduls (SAM), das auch als "Händlerkarte" bezeichnet wird. Zunächst liest das Terminal den frei zugänglichen Chip-Karteninhalt (Daten), und schickt die Daten an das SAM. Zur Überprüfung der Chip-Karte wird vom SAM eine Zufallszahl generiert, und über das Terminal an einen Prozessorbereich des Speicherbausteins der Chip-Karte geschickt. Ausgehend von der Zufallszahl berechnen Prozessoren in Chip-Karte und SAM unabhängig voneinander mittels eines Algorithmus einen Ergebniswert, der von einem im SAM vorgesehenen Komparator verglichen wird, wobei das Ergebnis des Vergleichs zur Annahme oder zur Zurückweisung der Karte dient. Diese Lösung erfordert nicht nur eine aufwendige Speicherung des Algorithmus im ROM-Speicher einer jeden Chip-Karte, es ist auch nicht möglich, den Zugriff auf einzelne Applikationen selektiv zu gestalten, da ein erfolgreicher Vergleich alle Applikationen zugänglich macht.

Eine aus der Praxis bekannte Chip-Karte verfügt, für eine endliche Anzahl von Zusatzapplikationen, in dem Speicherbaustein neben der Geldbörse auch noch über eine endliche Zahl von physischen Daten-Speicher-Bereichen, die jeweils einen vorher definierten Speicherplatz einnehmen und als "elementary files" bezeichnet werden. Zu jedem Daten-Speicher-Bereich gehört ein Schlüssel-Speicher-Bereich, auch "dedicated file" genannt, der einen Geheimschlüssel beinhalten kann, sowie ein allen Dateien übergeordnetes "master file". Diese Chip-Karte ist nicht flexibel einsetzbar, da die einmal einer Zusatzapplikation (z.B. Schülerausweis) zugeordneten dedicated files nicht mehr ohne weiteres für eine andere Zusatzapplikation (z.B. Studentenausweis) heranziehbar sind. Ferner ist es dem starren Prinzip dieser Karte als Nachteil immanent, daß in der Regel für reservierte Applikationen (z.B. elektronischer Fahrschein) nur eine Belegung möglich ist, so daß es nicht möglich ist, z.B. Fahrscheine von mehreren verschiedenen Anbietern gleichzeitig oder nacheinander zu speichern. Weiterhin besteht keine Möglichkeit, zwischen den Applikationen kreuzweise zu kommunizieren, beispielsweise wenn ein Parkhaus bei Einkauf in einem bestimmten Kaufhaus einen Nachlaß auf die Abstellgebühr gewähren möchte. Denn hierfür ist die Kenntnis des "Schlüssels" des jeweiligen Partners erforderlich, und dessen Ablage in der Bediensoftware des Terminals; der anschließende Gebrauch bzw. Mißbrauch bei derart geteiltem Zugriff ist dann nicht mehr rückgängig zu machen. Diese Einschränkungen führen aber zu einer geringen Akzeptanz der Karte insgesamt, insbesondere auch, weil zur Zeit noch nicht erkannte Applikationen einstweilen ausgeschlosssen bleiben. Ferner besitzt diese Karte den ganz entscheidenden Nachteil, daß es ihrem Inhaber nicht ohne weiteres möglich ist, sich die ihn betreffenden Inhalte der Karte anzusehen. Da jeder Anbieter einer Zusatzapplikation den Schlüssel seines eigenen elementary files geheimhalten möchte, kann der Karteninhaber - wenn überhaupt - nur an Terminals der Anbieter Wissenswertes über seinen Status erfahren. Wünschenswert wäre es, wenn dies in Form einer Liste für alle oder zumindest viele Applikationen möglich wäre.

Aus einem völlig anderen Gebiet der Technik ist es aus der Praxis bekannt, für sog. Pay-TV-Anwendungen Decoder-Vorrichtungen zwischen Kabelanschluß und Fernsehgerät zu installieren, die sicherstellen sollen, daß nur Kunden des Pay-TV-Anbieters das ursprünglich verschlüsselte Signal durch den Decoder entschlüsselt erhalten.

Es ist Aufgabe der Erfindung, eine Technik vorzuschlagen, die einen verbesserten Einsatz von Chip-Karten ermöglicht durch Schaffen einer Adapter-Vorrichtung bzw. eines Verfahrens zur Manipulation (Verarbeitung) der auf der Chip-Karte gespeicherten Informationen.

Diese Aufgabe wird erfindungsgemäß durch die Merkmale des Patentanspruchs 1 gelöst.

Die erfindungsgemäße Adapter-Vorrichtung verbessert die Möglichkeiten zum Betrieb einer Chip-Karte. Eine derartige Adapter-Vorrichtung ist selbständig mit der Chip-Karte zusammenschaltbar, und nur noch über Schnittstellen von Datenleitungen ist mit dem Händler-Terminal einen Datenaustausch vorgesehen. Das Händler-Terminal kann somit gemäß den Vorgaben des Händlers gebaut werden, z.B. integrierte Lösungen für Kasse und Terminal, Fahrkartenautomat und Terminal, etc. Der Zugriff auf die Adapter-Vorrichtung ist Unbefugten im allgemeinen verwehrt, so daß der in dem Speicherelement abgelegte Schlüssel im verteilten Betrieb einer Vielzahl von Akzeptanzstellen zur Verfügung gestellt wird, ohne daß er ihnen jedoch zugänglich ist. Es ist ökonomisch, wenn die Adapter-Vorrichtung in der Art eines Interfaces lediglich den Schlüssel zur Verfügung stellt, und das Terminal mit den Mitteln zum Schreiben/Lesen/Löschen, die ihm ohnehin z.B. für die Operationen einer elektronischen Geldbörse zur Verfügung stehen, die Schreib- bzw. Lesevorgänge vornimmt. Gegenüber bekannten Systemen ermöglicht die Adapter-Vorrichtung auch einen Zugriff auf Speichermittel, die innerhalb des Speicherbausteins der Chip-Karte nicht ursprünglich und/oder an einem bestimmten Ort vorhanden sind. Hierdurch ist eine hohe Einsatzflexibilität der Adater-Vorrichtung gegeben, die auch eine "Nachrüstung" mit einem oder mehreren Schlüsseln zuläßt. Ferner ist eine ressourcenschonende dynamische bedarfsabhängige Nutzung des zur Verfügung stehenden Speicherplatzes des Speicherbausteins ermöglicht.

Vorzugsweise aber weist die Adapter-Vorrichtung die Mittel zum Lesen, Schreiben und Löschen von Informationen in dem Speicherbaustein der Chip-Karte selbst auf, wodurch die Möglichkeiten zum Mißbrauch einer Chip-Karte durch unerlaubte Manipulationen reduziert werden, und ferner mehr Platz auf der Chip-Karte für Zusatzapplikationen verbleibt, oder aber die Technik des Terminals vereinfacht wird. Bei eventuell erforderlichen Nachbesserungen in dem Betriebssystem oder in der Applikation ist es leichter möglich, an die ortsfest eingebauten Adapter-Vorrichtungen zu gelangen, als alle Chip-Karten zurückzurufen. Bei Terminals, die nur für die Anzeige des Inhalts individueller Chip-Karten vorgesehen sind, kann selbstverständlich auf die Mittel zum Schreiben und Löschen verzichtet werden.

Es ist möglich, die Adapter-Vorrichtung sowohl derart auszubilden, daß sie nur in Datenaustauschverbindung mit der Chip-Karte gelangen kann, als auch derart, daß sie kontaktlos eine Datenaustauschverbindung herstellen kann. Vorteilhafterweise ist die Adapter-Vorrichtung derart ausgebildet, daß sie auch hybride Karten-Systeme mit beiden Möglichkeiten zum Datenaustauch gleichberechtigt manipulieren kann.

Mit dem Sicherheitsschaltkreis wird ferner sichergestellt, daß bei Ausbau der Adapter-Vorrichtung aus einem Terminal nach einer gewissen Zeit die Adapter-Vorrichtung nicht mehr einsatzbereit ist, wodurch dem Mißbrauch enge Grenzen gesetzt sind. Die Adapter-Vorrichtung ist ausschließlich von einer autorisierten Stelle programmierbar, die die Zugriffsmöglichkeiten des Terminals auf ganz konkrete Anwendungen beim Lesen und Beschreiben der Chip-Karte begrenzt.

Der Sicherheitsschaltkreis umfaßt beispielsweise einen Akkumulator und einen Verbraucher, die derart aufeinander eingestellt sind, daß eine Trennung des Akkumulators von der Netzversorgung eine Entladung innerhalb einer vorgegebenen Zeitdauer bewirkt, und daß die Reaktivierung des Schaltkreises nur durch Eingabe eines Paßworts oder durch bestimmte physische Eingriffe möglich ist.

Eine besonders bevorzugte Weiterbildung der Erfindung läßt die Adapter-Vorrichtung nicht nur den Schlüssel zu den Speichermitteln abliefern, sondern entscheidet aufgrund einer im Speicherelement abgelegten Tabelle, ob jeder einzelne Zugriff auf jede einzelne Kennung zur Durchführung jeder einzelnen Operation zulässig ist oder nicht. Da der Adapter ohnehin für Dritte nicht zugänglich ist, läßt sich diese wichtige Prüffunktion vorteilhaft integrieren. Geeigneterweise ist es hierfür vorgesehen, daß die Adapter-Vorrichtung mit Komparatormitteln ausgestattet ist, die eine Betätigung der Adapter-Vorrichtung in einem ersten Bearbeitungsmodus auslösen, wenn eine vorgegebene Kennung auf der Chip-Karte mit einer vorgegebenen Kennung übereinstimmt, und die eine Betätigung der Vorrichtung in einem zweiten Bearbeitungsmodus auslösen, wenn keine Kennung auf der Chip-Karte mit der vorgegebenen Kennung übereinstimmt. Als erster Bearbeitungsmodus ist zweckmäßigerweise ein Löschen oder ein Überschreiben der zu der Kennung gehörenden Daten vorgesehen, während als zweiter Bearbeitungsmodus das Anlegen eines Datensatzes mit der Kennung vorgesehen ist. Gemäß einer geeigneten Weiterbildung können die Komparatormittel auch in der Art eines Filters derart ausgebildet sein, daß das Ergebnis des Vergleichs lediglich in Abhängigkeit von einer teilweisen Übereinstimmung der Kennungen erzeugbar ist. Dadurch kann beispielsweise ein Anwender über mehrere Kennungen mit gemeinsamen Kern für ähnliche oder gleichartige oder mit anderen Anwendern geteilte Zusatzapplikationen verfügen, die er gemäß einer eigenen Rangfolge von Prioritäten verarbeitet. Ein Parkhausbetreiber würde alle "Parkhauskennungen" abfragen und anschließend zunächst prüfen, ob eine Dauerparkberechtigung (z.B. Monatsparkschein) vorliegt, anschließend, ob ein gültiger "Gutschein" von einem Partnerunternehmen auf der Chip-Karte gespeichert ist, dann, ob es einen Großkundenrabatt für diesen Kunden gibt, schließlich, ob die Parkzeit bereits im Voraus gekauft und gutgeschrieben wurde. Letztendlich kann der Kunde dann noch mit der elektronischen Geldbörse bezahlen.

Insbesondere ist es möglich, die Adapter-Vorrichtung mit einem Zeitkomparatormittel auszustatten, das ein Verfallsdatum eines Datensatzes auf der Chipkarte mit der Real-Zeit vergleicht, und in Abhängigkeit von dem Ergebnis des Vergleichs den betreffenden Datensatz löscht bzw. unangetastet läßt. Durch diese überraschend einfache Maßnahme lasen sich nach einem besonders bevorzugten Verfahren unabhängig von den Kennungen regelmäßig "Karteileichen" aus dem zweiten Speichermittel der Chip-Karte entfernen; es ist aber auch möglich, diese Vergleichsoperation erst bei Platzbedarf durchzuführen.

Vorzugsweise sind in dem Speicherelement Mittel vorgesehen, die zur Abspeicherung eines Wertes dienen, der für den jeweils neu belegten Speicherplatzverbrauch repräsentativ ist, indem die effektiv verbrauchte Ressource gemessen wird und ein Verbleib in den Speichermitteln bis zum Verfallsdatum unterstellt wird. Weitere Mittel, die zur Abspeicherung eines Guthabens von vor dem Verfallsdatum gelöschten Datensätzen in den Speichermitteln dienen, können ebenfalls vorgesehen werden. Über eine Datenleitung lassen sich die Summenwerte oder die Salden an eine zentrale Abrechnungszentrale weiterleiten, und den Akzeptanzstellen in Rechnung stellen.

Chip-Karte und Adapter-Vorrichtung lassen sich ideal zu einer Schaltung kombinieren, bei der Mittel zum Schreiben und Lesen der Adapter-Vorrichtung mit dem Speicherbaustein der Chip-Karte zusammenwirken. Im oder am Terminal ist die Adapter-Vorrichtung eingebaut, und diese letzteren sind über Schnittstellen miteinander verschaltet. Vorzugsweise handelt es sich bei dem Terminal um ein Terminal, das für die Abwicklung des Zahlungsverkehrs mit der eingangs genannten elektronischen Geldbörse geeignet ist.

Es ist für den Fachmann klar, daß die Technik gemäß der Erfindung auch bei Chip-Karten verwendet werden kann, die andere bargeldlose Zahlungsverfahren einsetzen als die elektronische Geldbörse, z.B. bei Kreditkarten oder Debit-Karten.

Das erfindungsgemäße Verfahren ermöglicht eine besonders speicherplatzeffiziente Nutzung einer Chip-Karte. Gegenüber Verfahren aus dem Stand der Technik, bei denen eine Zusatzapplikation entweder bei Ausgabe der Karte bereits vorgesehen ist oder aber nicht möglich ist, können bei Chip-Karten mit frei adressierbaren Speichermitteln Applikationen beliebig geschaffen und wieder gelöscht werden. Es ist daher erforderlich, ein angepaßtes Verfahren vorzuschlagen, gemäß dem vorteilhafterweise sichergestellt ist, daß eine identische und durch ihre Kennung identifizierte Applikation nicht mehrfach gespeichert wird.

Es ist vorzugsweise ein Verfahrensschritt vorgesehen, der es ermöglicht, nach einem Zeitkriterium veraltete Informationen zu löschen, indem für jeden Datensatz ein mit der Information gespeichertes Verfallsdatum gelesen und mit der Real-Zeit verglichen wird, und bei Überschreitung des Verfallsdatums der Datensatz gelöscht wird. Besonders vorteilhaft ist es, wenn die Information über das Verfallsdatum mit der Kennung verarbeitet wird, um somit den Suchaufwand zu minimieren. Neben diesem "automatischen" Löschen von Anwendungen, die ihren Verfallszeitpunkt überschritten haben, ist es möglich, Applikationen ganz oder teilweise gezielt zu löschen, beispielsweise infolge Verbrauchs einer Gutschrift.

Alternativ ist es aber auch möglich, die Suche nach verfallenen und damit löschungsreifen Einträgen nur dann durchzuführen, wenn wirklich ein Speicherplatzbedarf besteht, so daß nicht unerwartet lange Wartezeiten entstehen.

Die Erfindung wird im folgenden anhand eines Ausführungsbeispiels unter Bezugnahme auf die Zeichnungen näher erläutert, worin

Fig. 1 einen Schnitt durch einen Teil einer Chip-Karte zeigt, die in einen Adapter eingeschoben ist;
Fig. 2 eine schematische Darstellung eines Speicherbausteins der Chip-Karte aus Fig. 1 darstellt;
Fig. 3 (a) bis (e) schematische Darstellungen von Speicherorganisationen des nichtflüchtigen Speichers des Speicherbausteins aus Fig. 2 darstellen;
Fig. 4 eine schematische Darstellung eines erfindungsgemäßen Adapters im Längsschnitt zeigt;
Fig. 5 eine schematische Darstellung einer Sicherheitsschaltung für einen Adapter aus Fig. 4 darstellt; und
Fig. 6 einen konkreten Anwendungsfall illustriert.

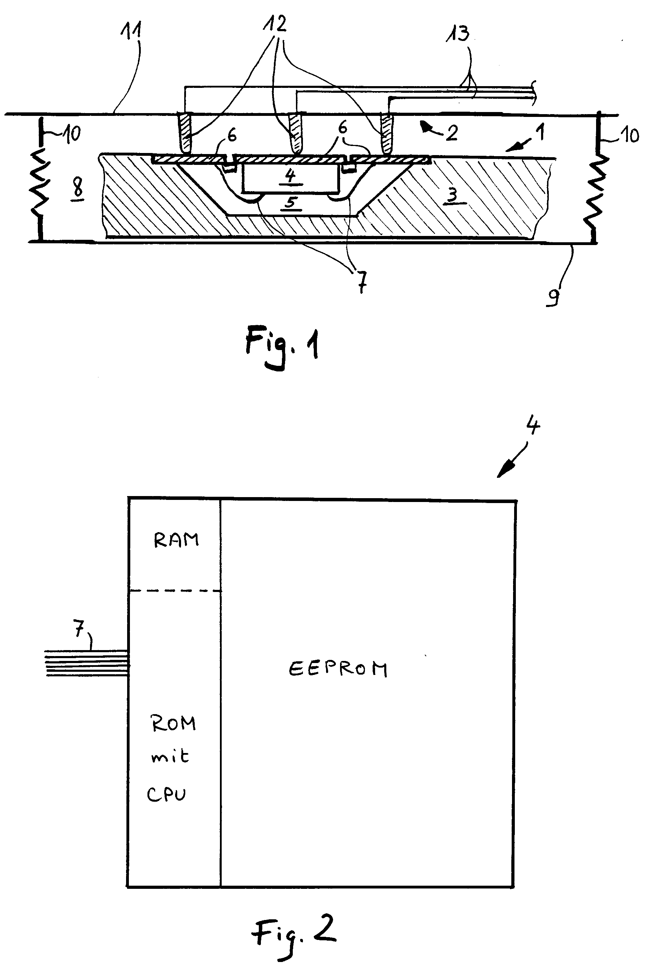

Fig. 1 zeigt eine Chip-Karte 1 und einen Adapter 2, die miteinander in Eingriff stehen. Die Chip-Karte 1 besteht aus dem Kartenkorpus 3 aus Kunststoff, in den ein Speicherbaustein 4 integriert ist. Der Speicherbaustein 4 ist in dem Korpus 3 mittels einer Klebstoffmasse 5 fixiert. Konplanar mit der Oberfläche des Korpus 3 sind in diesem mehrere, beispielsweise sechs, flache metallische Kontaktierungsflächen 6 angeordnet, die ebenfalls von der Klebstoffmasse 5 fixiert sein können. Zwischen den benachbarten Kontaktierungsflächen 6 besteht kein Leitungskontakt. Die Kontaktierungsflächen 6 sind im wesentlichen sternförmig angeordnet, und über Golddrähte 7, die in der Klebstoffmasse 5 eingebettet sind, mit dem Speicherbaustein 4 verbunden. Die Klebstoffmasse 5 ist ein elektrischer Isolator. Eine zentrale Kontaktierungsfläche kann sich unmittelbar oberhalb des Speicherbausteins 4 befinden und diesen vollständig abdecken.

Der Adapter 2 weist eine schlitzförmige Kartenaufnahme 8 auf, die so dimensioniert ist, daß sie eine Chip-Karte 1 in Längsrichtung wenigstens insoweit aufnehmen kann, daß die Kontaktierungsflächen 6 der Chip-Karte 1 vollständig aufgenommen sind. Vorzugsweise ist die Aufnahme 8 leicht konisch vorgesehen, um eine im wesentlichen selbstzentrierende axiale Führung zu gewährleisten und ein Verkanten beim Einführen der Chip-Karte 1 zu vermeiden. Der Bodenbereich 9 der Aufnahme 8 ist durch Federn 10 in Richtung auf die gegenüberliegende Oberseite 11 vorgespannt. Statt Federn können auch andere Anpreßmittel vorgesehen werden. Die Vorspannung ist aufgehoben, solange die Karte 1 sich im Bereich der Einlaßöffnung 8a der Aufnahme 8 befindet, und drückt die Karte 1 erst in Richtung auf die Oberseite 11, wenn sich die Kontaktierungsflächen 6 unterhalb von Leiterstiften oder Pins 12 befinden. Die Pins 12 sind an der Oberseite 11 der Aufnahme 8 so angeordnet, daß jeder Pin 12 mittig eine Kontaktierungsfläche 6 zur Herstellung eines elektrischen Kontaktes bleibend berührt. Die Aufnahme 8 weist acht Pins 12 auf. Es ist aber möglich, Aufnahmen vorzusehen, die weniger Pins 12 aufweisen, als die zugehörige Karte Kontaktierungsflächen 6. Von den 8 Einzelkontakten werden 6 tatsächlich benutzt (1 für Takt-Eingang, 1 für Daten-Ein/Ausgang, 1 für Rückstellung, 2 für Versorgungsspannungs-Potentiale, 1 für Nullpotential). Die Kommunikation zwischen Karte 1 und Adapter 2 erfolgt über Kommandos, die von letzterem ausgehen, wobei die Karte 1 "passiv" reagiert, d.h. Antworten gibt. Der Zugriff zu verschiedenen Funktionen, insbesondere zu den Speichermitteln, erfolgt durch unterschiedliche Kommandos, die von der Karte 1 (bzw. dem enthaltetenen Programm) entsprechend interpretiert werden. Von jedem Pin 12 führt jeweils eine Leitung 13, die auch als Leiterbahn in einer Platine ausgebildet sein kann, fort. Es ist ferner möglich, die einzelnen Pins 12 ebenfalls leicht vorzuspannen.

Die Aufteilung des Speicherbausteins 4 wird anhand von Fig. 2 näher erläutert. Der Speicherbaustein umfaßt einen ROM-Speicher-Bereich, der nichtflüchtig ist und nur gelesen werden kann; in diesem ROM-Bereich ist das Prozessor-Programm der elektronischen Geldbörse abgelegt, und ferner die Programme, die die Suche im EEPROM-Speicher-Bereich ermöglichen. Der EEPROM-Bereich ist ein nicht-flüchtiger Speicher, der gelesen, gelöscht und beschrieben werden kann. Hier werden teilweise Informationen der Geldbörsenfunktion abgelegt, z.B. Angaben über das Datum der letzten Barabhebung sowie andere Informationen, die auch spezifisch für das ausgebende Geldinstitut sein können. Soweit nicht schon ursprünglich mit Daten des Geldinstituts belegt kann dieser Bereich, oder ein bestimmter Teil hiervon, mit Zusatzapplikationen beschrieben werden. Der flüchtige RAM-Speicher schließlich dient für Berechnungen, deren Ergebnisse nur kurzfristig festgehalten werden sollen oder dürfen, was zumeist im Bereich der Geldbörsenapplikation erfolgt. Die von der Geldbörsenapplikation belegten ROM- und EEPROM-Bereiche bilden erste Speichermittel, auf die nur mit Kenntnis einer PIN zugegriffen werden kann. Der übrige Bereich unter Einschluß einiger "freier" Funktionen im ROM-Bereich bildet zweite Speichermittel, wobei selbstverständlich neben den zweiten Speichermitteln noch weitere vorgesehen sein können. Um auf die zweiten Speichermittel zugreifen zu können, muß der Schlüssel derselben angegeben werden können.

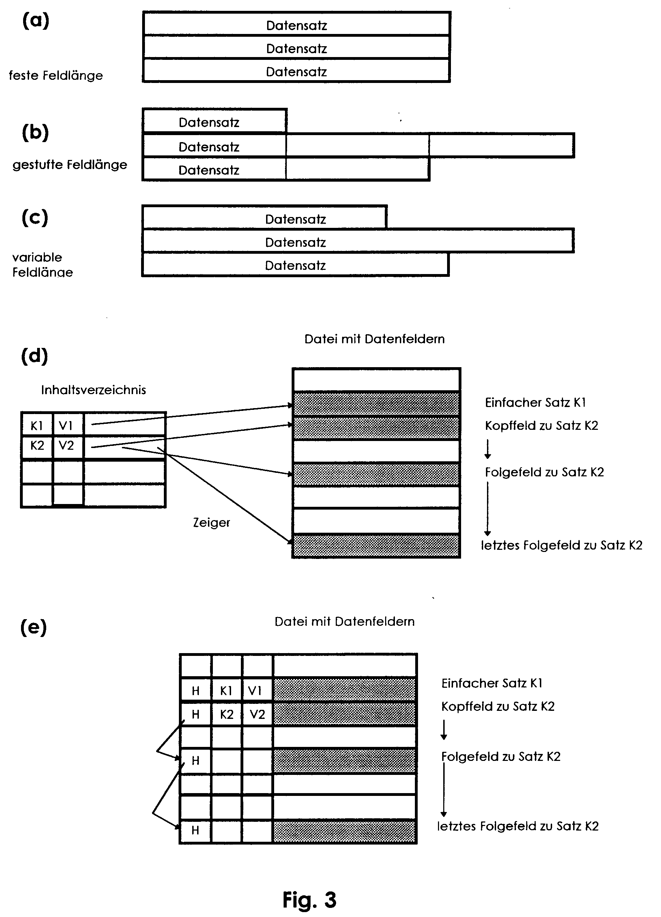

Die Fign. 3 (a), (b) und (c) illustrieren die möglichen Dateiorganisationen in Datensätzen innerhalb des EEPROM. Die Datensätze können eine feste, gestufte oder variable Länge haben. Variable bzw. gestufte Längen passen sich den jeweiligen Erfordernissen der Anwendung an und nehmen nur bzw. annähernd nur so viel Platz in Anspruch, wie die Anwendung benötigt.

Vorzugsweise erfolgt die Speicherung und Verwaltung als Datensätze mit gestufter Länge. Einerseits passen sie sich in ihrer Länge dem Bedarf gut an; andererseits erfordert das Entfernen und Wiedereintragen von Sätzen nur geringen Zeitbedarf, so daß eine schnelle Abfertigung am Terminal gewährleistet ist. Der EEPROM-Bereich besteht hierbei aus einer Folge von gleich langen, aneinandergrenzenden Datenfeldern; ein Datensatz nimmt dann einen oder mehrere, miteinander verkettete Datenfelder ein (1 Kopffeld sowie Folgefelder). Ein separates Inhaltsverzeichnis enthält die Kennungen K der vorhandenen Datensätze, die zugehörigen Verfallszeitpunkte V und eine Reihe von Zeigern zu den besetzten Feldern, vgl. Fig. 3 (d).

Eine abgewandelte Struktur kommt ohne separates Inhaltsverzeichnis aus. Hier stehen die Kennung K und der Verfallszeitpunkt V in den Datensätzen (bzw. Kopfbereichen) selbst; außerdem enthält jedes Datenfeld einen Header H, der angibt, ob das Feld frei oder belegt ist, und der ggf. einen Verweis (Zeiger) auf das Datenfeld enthält, mit dem es verkettet ist, um einen vollständigen Datensatz zu bilden, vgl. Fig. 3 (e).

Es ist klar, daß der Zugriff auf Datenfelder erst "frei" ist, wenn zuvor vom Adapter 2 der korrekte Schlüssel übermittelt wurde.

Die Chip-Karte 1 weist in ihrem Speicherbaustein 4 erste und zweite Speichermittel auf, beide über die Kontaktflächen 6 kontaktierbar sind, wobei der Zugriff auf die ersten Speichermittel gemäß dem bekannten Zugriff auf eine elektronische Geldbörse erfolgt, d.h. daß zum Auffüllen eine Geheimzahl erforderlich ist, während das Bezahlen anonym geschehen kann. Der Zugriff auf die zweiten Speichermittel ist dagegen stets anonym möglich (wenn auch Anonymität nicht immer beabsichtigt ist). So ist, vorausgesetzt der Zugriff ist mit dem Schlüssel in Adapter 2 erfolgt, der gesamte Speicherbereich lesbar, wobei die Informationen verschlüsselt abgespeichert sein können, und der der Verschlüsselung zugrundeliegende Code nur dem Anbieter der Zusatzapplikation oder seinen Geschäftspartnern bekannt ist. Auf diese Weise können aber auch Klartextinformationen gespeichert werden, die allen Lesern der Chip-Karte zur Verfügung stehen. Dies wird weiter unten noch näher erläutert.

Der in den zweiten Speichermitteln für allgemeine Informationen vorhandene Speicherplatz (ein Teil des Speicherplatz wird von den Geldbörsenfunktionen benötigt) ist universell verwendbar, d.h. er steht prinzipiell für Anwendungen aller Art und damit für Datensätze jeder Struktur und jeden Umfangs bedarfsgerecht zur Verfügung. Demnach ist es nicht notwendig, Datensätze schon von vorneherein (z.B. bei der Herstellung oder Initialisierung der Karte) zu erzeugen, sondern dies ist erst dann, wenn sie tatsächlich gebraucht wird, erforderlich, wodurch die Flexibilität bei der Produktion erhöht und die permanente Erweiterbarkeit des Anwenderkreises vorteilhaft sichergestellt ist.

Jeder Typ eines Datensatzes einer bestimten Anwendung kann entsprechend seiner spezifischen Anwendung hinzugefügt werden, wobei er anhand der Kennung identifizierbar und anwendungsgerecht strukturierbar ist.

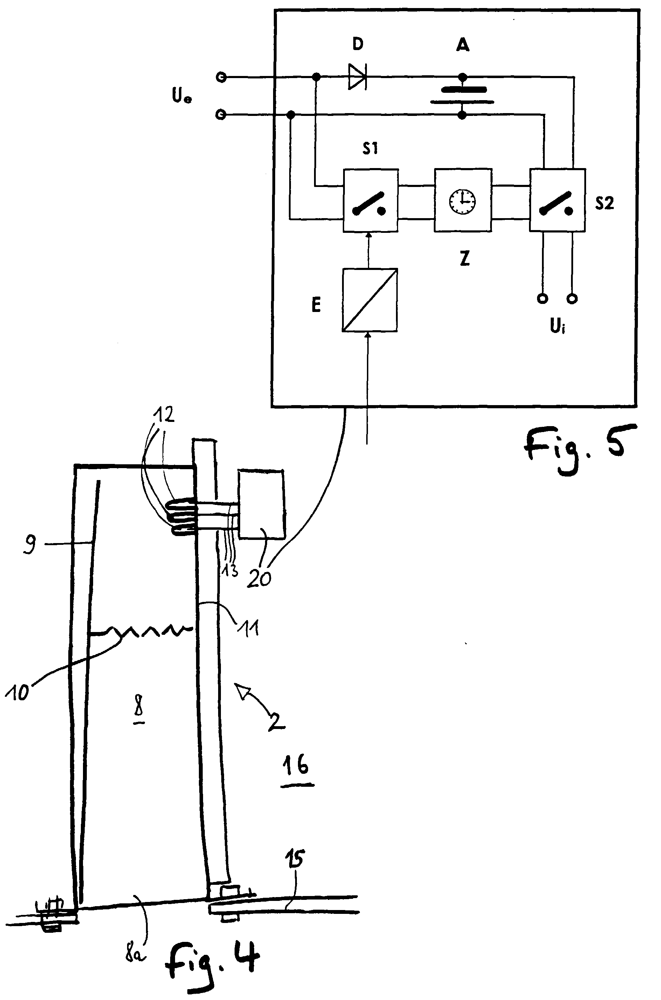

In Fig. 4 ist der Adapter 2 mit seinen Komponenten dargestellt. Der Adapter besteht aus der Aufnahme 8, an deren Oberseite 11 eine Leiterplatine 14 angeordnet ist. Der Adapter 2 ist mittels Schrauben an dem Gehäuse 15 eines Terminals 16 befestigt, wobei zugleich eine Verkleidung der Einlaßöffnung 8a der Aufnahme 8 erfolgt. Es ist möglich, Sperren oder dergl. vorzusehen, damit insbesondere während des Betriebs keine Manipulationen der Karte 1 oder des Adapters 2 vorgenommen werden können. Bei dem Terminal 16 handelt es sich um ein Verkaufsterminal, an dem Eintrittskarten für eine Messe verkauft werden.

Die Halbleiterplatine 14 ist mit einem Speicherelement 20 versehen, das aktiv ist, d.h. es kann Befehle zum Lesen oder Schreiben der Chip-Karte mittels eines im Speicherelement 20 abgelegten Programms ausführen. Eine wichtige Rolle des Adapters 2 liegt darin, daß er zwischen Terminal 16 und Chip-Karte 2 wenigstens teilweise eine physische Trennung realisiert, und auf diese Weise als Separierung bzw. als Puffer fungiert.

Der Schlüssel für den Zugriff auf die zweiten Speichermittel der Chip-Karte 1 ist (versteckt) in dem Speicherelement 20 abgelegt. Hierdurch wird er dem Zugriff der Terminalbetreiber entzogen, so daß vorteilhafterweise eine Aufteilung der Ressource Speicherplatz unter einer unbeschränkt großen Anzahl von Akzeptanzstellen und Applikationsanbietern möglich ist.

In einem Teil des Speicherelements 20 ist ferner eine Tabelle gespeichert, in der für das spezifische Terminal 16 vermerkt ist, auf welche Kennungen K es Zugriffe durchführen darf (jeweils unterteilt nach Lesen, Schreiben, Löschen). Aus Gründen der Sicherheit ist diese Funktion in dem Adapter 2 abgelegt, so daß jeder Anwender ein Terminal nach seinen Wünschen herstellen lassen kann, in das nur noch der Adapter 2 eingebaut werden muß. Aber auch wenn z.B. durch Diebstahl ein Adapter verschwindet, kann dieser nicht ohne detaillierte Kenntnis des Speicherelements 20 umprogrammiert werden, so daß dem Dieb nur die Funktionen aus dem Terminal 16 zur Verfügung stehen. Dies ist eine fundamentale Verbesserung gegenüber bekannten Sicherheitsmodulen, bei denen nach Überwinden von Geheimzahlsperren jedwede Applikation möglich ist. Der Lese-, Schreib-oder Lösch-Wunsch wird vom Terminal 16 an den Adapter 2 geleitet, der eine Zulässigkeitsprüfung veranlaßt und die Ausführung des Wunsches nur dann zuläßt, wenn der Zugriff berechtigt ist.

Die Stromversorgung des Adapters 2 erfolgt über das Terminal 16 (nicht dargestellt). Es ist grundsätzlich möglich, den Adapter 2 mit einem eigenen Transformator zu versehen, um die erforderliche Stromversorgung zu erzielen, dies wird aber aus Platz- und Kühlungsgründen besser an anderer Stelle im Terminal 16 vorgesehen. Für den Fall eines Netzausfalls können Pufferungen über einen zeitlich begrenzten Akku-Betrieb vorgesehen sein. Es ist möglich, den Adapter 2 mit einem Motor zu versehen, der über Räder oder dergl. den Einzug und die Rückgabe der Chip-Karte 1 auslöst.

Über die Kontaktierungsflächen 6 und die Pins 12 und Leitungen 13 kann das aktive Speicherelement 20 auf die verschiedenen Speicherbereiche des Speicherbausteins 4 zugreifen. Es ist aber alternativ möglich, diese Funktionen mit einer kontaktlosen Chip-Karte zu realisieren.

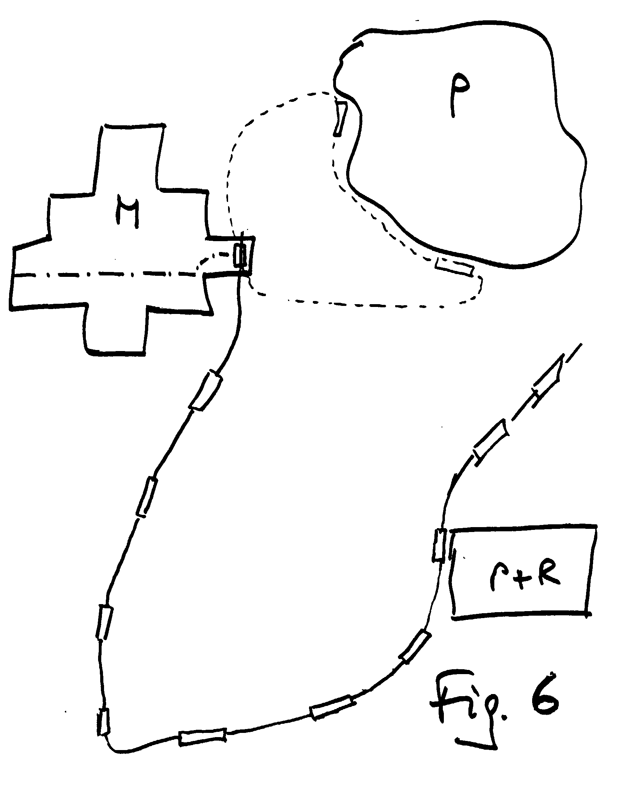

Der Adapter 2 weist ferner eine Mißbrauchssperre auf, die verhindert, daß der Adapter 2 aus dem Terminal 16 aus- und mißbräuchlich in einem anderen Terminal eingebaut wird. Gemäß Fig. 5 umfaßt die Mißbrauchsperre einen Schaltkreis, der nachstehend näher erläutert wird. Bei (auch kurzzeitigem) Ausfall der externen Versorgungsspannung Ue (auch insbesondere durch Entfernen des Adapters 2 aus dem Terminal 16) übernimmt der über die Diode D entkoppelte Akkumulator A weiterhin die interne Spannungsversorgung Ui. Der Schalter S1 schaltet jedoch sofort aus, woraufhin eine Zeitschaltung Z anläuft, die wiederum nach einer Zeit t einen zweiten Schalter S2 ausschaltet, der die interne Spannungsversorgung Ui abtrennt und dadurch den gesamten Adapter totlegt. Er kann erst wieder in Funktion gesetzt werden, wenn der Schalter S1 über ein externes, verschlüsseltes Signal reinitialisiert wird; die Entschlüsselung übernimmt eine entsprechende Schaltung E. Es versteht sich, daß die Schaltung E im Speicherelement 20 abgelegt sein kann.

Anhand eines Beispiels wird die Funktionsweise der Erfindung nachstehend näher erläutert.

Der Inhaber einer als elektronischen Geldbörse fungierenden Chip-Karte 1 (im weiteren: der Kunde) beabsichtigt den Besuch einer Messe. Im Vorverkauf werden von der Messegesellschaft über Automaten Eintrittskarten für die im kommenden halben Jahr stattfindenden Messen angeboten, die beispielsweise die folgenden seien: Auto (findet in der 1. Kalenderwoche statt); Boot (2. KW); Chemie (2. und 3. KW); Drachen (4. KW); Email (5. KW); Fisch (6. KW); Garten (7. KW);

und Hotel (9. KW). Die Messegesellschaft besitzt eine eindeutige numerische Kennung, die als Binärzahl darstellbar ist.

Der Kunde möchte die beiden Messen Boot und Chemie besuchen. Er bezahlt mit der Geldbörse 1 die beiden Eintrittskarten; die Eintrittskarten werden unter der Messe-Kennung in dem Speicherbaustein 4 abgelegt.

Am Messestandort besteht ein öffentliches Nahverkehrsunternehmen. Dieses verkauft über seine Automaten gegen Bezahlung mit der elektronischen Geldbörse zwei Typen von Fahrscheinen. Typ I ist ein Einzelfahrschein, dessen Kosten proportional zur Anzahl der gefahrenen Streckenabschnitte ist. Wenn also der Kunde nach 5 Stationen aussteigen möchte, muß er hierfür z.B. 5 Geldeinheiten zahlen. Typ II ist ein Dauerfahrschein, bei dem ein Pauschalpreis zur Nutzung des gesamten Nahverkehrsnetzes gezahlt werden muß.

Am Messestandort besteht ferner eine Hochschule, die für ihre Studenten einen Studentenausweis ausgibt, der jeweils für ein Studiensemester gültig ist und gegen Vorauszahlung des Semesterbeitrags verlängert wird. Eine weitere Voraussetzung ist, daß der Student krankenversichert ist.

Die Messegesellschaft besitzt einen Kooperationsvertrag mit dem Betreiber des öffentlichen Nahverkehrsunternehmens dahingehend, daß ein Messebesucher kostenlos einen Pendelbus von einem Messeparkplatz P zum Messegelände M und zurück benutzen darf, wobei die Parkerlaubnis als Fahrschein gilt. Ferner gilt die Eintrittskarte am Tag des Messebesuchs als Gutschein für 10 Stationen mit öffentlichen Verkehrsmitteln.

Die Hochschule besitzt einen Kooperationsvertrag mit dem Betreiber des öffentlichen Nahverkehrsunternehmens dahingehend, daß ein Student (natürlich nur dieser Hochschule) während des Semesters eine kostenlose Dauerkarte erhält.

Die Messegesellschaft ermäßigt Studenten den Eintrittspreis um 20%.

Will nun ein Kunde C1, der zugleich Student ist, eine Messeeintrittskarte an einem Verkaufsterminal 16 kaufen, werden die folgenden Schritte durchlaufen:

(1) Über ein Eingabegerät gibt der Kunde C1 seinen Kaufwunsch ein, also z.B. eine Studenteneintrittskarte für die Messe Boot;

(2)

(a) Über eine Bildschirmanzeige wird der Kunde C1 aufgefordert, seinen elektronischen Studentenausweis einzulegen;
(b) nachdem dies geschehen ist, führt ein im Terminal integrierter Adapter 2 eine Lesefunktion aus, bei der alle Kennungen verglichen werden, die eine Studentenausweisapplikation zum Ausdruck bringen;
(c) falls eine Studentenausweisapplikation vorliegt, wird das in dem Datenfeld eingetragene Verfallsdatum mit dem aktuellen Datum verglichen; falls das Verfallsdatum verstrichen ist, ist es optional möglich, den Datensatz zu löschen;
(d) Falls kein gültiger Studentenausweis eingelegt ist, wird der Verkauf einer ermäßigten Eintrittskarte verweigert;

(3) Falls ein gültiger Studentenausweis vorliegt, kommen verschiede Fälle in Betracht:

(3.1) Der Kunde C1 möchte mit derselben elektronischen Geldbörse 1 zahlen; dann erfolgt die Abbuchung von der Geldbörse 1, und die Eintrittskarte wird in deren EEPROM geschrieben.
(3.2) Der Kunde möchte mit einer fremden (oder einer eigenen, zweiten) elektronischen Geldbörse 1' bezahlen;
(3.2.1) Falls das Terminal noch einen zweiten Einlaß (nur) für eine elektronische Geldbörse 1' aufweist, wird die Geldbörse 1' in den zweiten Einlaß eingelegt, der Betrag abgebucht, die Eintrittskarte auf die erste Karte 1 geschrieben, beide Karten 1, 1' ausgegeben;
(3.2.2) Falls das Terminal keinen zweiten Einlaß aufweist, kann entweder der Studentenausweis wieder ausgegeben werden, die zweite Karte 1' eingelegt werden, und geschrieben werden, wenn die gespeicherten und frei lesbaren Personendaten identisch sind; oder, falls die Daten nicht identisch sind, muß anschließend der elektronische Studentenausweis 1 erneut eingelegt werden zur Gutschrift der ermäßigten Eintrittskarte;
(3.3) wie (3.1) oder (3.2), aber der EEPROM-Bereich ist voll, und läßt keine weitere Beschriftung zu; dann kann optional gesucht werden, ob abgelaufene (Vergleich Verfallsdatum) Felder gelöscht werden können, um so Platz zu schaffen; oder es wird eine (optional personalisierte) Eintrittskarte vom Terminal ausgedruckt;

(4) Falls der auf der elektronischen Geldbörse 1 oder 1' vorhandene Geldbetrag nicht ausreicht, wird dies angezeigt, und ein Verkauf findet nicht statt;
(5) Schließlich werden die Karte(n) 1 bzw. 1' zurückgegeben.

Mit diesem Verfahren wird auf besonders vorteilhafte Weise gewährleistet, daß vergünstigungsberechtigte Kunden nur selbst in den Genuß der Ermäßigung gelangen. Eine Übertragung auf einen Nichtberechtigten wird weitestgehend vermieden. Ferner ist es möglich, das Verfallsdatum der Berechtigung eines Studenten etc. zu kontrollieren, unabhängig von der Hochschule, an der er eingeschrieben ist.

Optional kann z.B. in Schritt (2) auch noch geprüft werden, ob der Studentenausweis 1 auch noch zum Zeitpunkt der Messe gültig sein wird. Kauft ein vollzahlender Kunde C2 eine Messekarte, erübrigen sich die Schritte (2) und (3.2.2) im wesentlichen.

Als Verfallsdatum ist nach dem Kauf der Eintrittskarte in dem Datensatz zunächst der letzte Messetag notiert (In den Allgemeinen Geschäftsbedingungen der Messegesellschaft ist vorgesehen, daß eine Erstattung des Eintrittspreises bei Rücktritt vom Besuch nach Ablauf der Messe ausgeschlossen ist).

Die Kunden C2 (Vollzahler) und C1 (Student) besitzen nun beide eine auf ihrer elektronischen Geldbörse 1 gespeicherte Eintrittskarte. Sie steigen beide an der nahe einem Parkplatz P+R gelegenen Bushaltestelle B in die Buslinie zum Messegelände M ein. Von dort aus sind es 8 Stationen.

Im Bus, aber optional auch an der Haltestelle, befindet sich ein Terminal 16', das die elektronische Geldbörse 1 lesen kann. Das Terminal weist ferner ein Eingabeperipheriegerät, beispielsweise eine Tastatur oder einen Touch-Screen-Monitor auf, in dem die Fahrgäste ihr Ziel eingeben. Dies dient zum einen zur Entrichtung des Fahrpreises, zum anderen aber auch für statistische Zwecke: So kann die durchschnittliche Verkehrsbelastung, Wartezeiten, etc. ermittelt werden, und diese ferner nach Passagiertypen differenziert werden.

Das Terminal 16' ist mit einer Adapter-Vorrichtung 2 versehen, die neben der Abwicklung einer reinen Zahlungsfunktion alle Kennungen K liest, die an einer bestimmten Stelle der Kennung eine Null stehen haben. Hierzu gehören die Applikationen des Nahverkehrsunternehmens, aber auch andere, mit Dritten geteilte Applikationen, im vorliegenden Fall die Messegesellschaft.

Der Prozessor ist also zugriffsberechtigt auf den Datensatz "Messe". Vorzugsweise ist eine Information gespeichert, die eine Aussage über den frühesten Messetag enthält. Wird also das Terminal an einem Messetag mit der Chip-Karte "gefüttert", entwickelt sich ein Dialog, beispielsweise über einen Bildschirm des Terminals T:

T:      Wollen Sie heute die Messe Chemie besuchen ?
C1:     Nein
T:      Wollen Sie heute die Messe Boot besuchen ?
C1:     JA

Die Adapter-Vorrichtung 2 bucht nunmehr von der Gutschrift von 10 Stationen 8 ab, und überschreibt das entsprechende Feld mit dem Saldo von 2 verbleibenden Stationen. Auf der Rückfahrt werden zunächst die 2 Stationen abgerechnet, anschließend müssen noch 6 Stationen bezahlt werden. Ferner wird vorteilhafterweise die Gültigkeit der Messeeintrittskarte auf den Tag selbst verändert, so daß die Messekarte tags drauf schon gelöscht werden kann.

Falls mehrere Messen gleichzeitig stattfinden und mehrere Eintrittskarten gebucht sind, sind Maßnahmen wie z.B. der Dialog zu ergreifen, damit richtig verbucht wird.

Grundsätzlich ist es erst am Tag des Messebesuchs erforderlich, Speicherplatz für die Busfahrscheine in dem EEPROM vorzusehen. Es ist aber vorzugsweise vorgesehen, daß bereits beim Kauf der Messeeintrittskarte ein Feld für den Busfahrschein reserviert ist. Dies kann z.B. dadurch geschehen, daß beim Kauf einer Messekarte mehrere (verkettete) Felder von der Applikation in Anspruch genommen werden, die sich am Besuchstag in eine Busfahrkarte und ein Tagesbesucherticket teilen lassen, so daß sichergestellt ist, daß die Chip-Karte 1 beim Besteigen des Busses Platz für die Speicherung des verbleibenden Gutschriften-Saldos (obenz.B. 2 kostenlose Stationen) aufweist. Optional kann diese Maßnahme bei einer Studentenkarte wieder fallengelassen werden, wenn sichergestellt ist, daß der Student an der Hochschule studiert, die mit dem Nahverkehrsunternehmen zusammenarbeitet, also kein auswärtiger Student ist. Unabhängig hiervon kann, entweder dann, wenn die Chip-Karte voll ist oder bei jeder Anwendung, geprüft werden, ob "alte" Datensätze, die löschungsreif sind, zur Schaffung von freiem Speicherplatz entfernt werden können.

Wenn ein Student der örtliche Hochschule den Bus nimmt, ist natürlich sicherzustellen, daß zunächst die Freifahrt berücksichtigt wird.

Die vorstehend erläuterte Schrittfolge läßt sich allgemnein anwnden beim Vergüten und Belasten einer Chip-Karte.

Es ist möglich, den bei Ausgabe der Chip-Karte zur Verfügung stehenden EEPROM-Speicherplatz durch Belegen mit "Dummys" teilweise oder ganz zu sperren. Dies geschieht beispielsweise mit bestimmten Feldgrößen, die anschließend an Anwender verkauft werden. Tatsächlich speichert beispielsweise die Bank einen eigenen Datensatz, dessen Verfallsdatum noch lange währt. Will sie diesen Platz einem Vertragspartner zur Verfügung stellen, kann sie die Kennung weitergeben (verkaufen), wobei dann der Erwerber der Kennung den Speicherplatz selbständig gemäß seiner eigenen Anwendung erschließt, und vorzugsweise die alte Kennung löscht und Datensätze mit seiner eigenen Kennung schreibt.

Der Speicherplatz auf der Chip-Karte 1 ist eine kostbare Ressource, so daß vorzugsweise derjenige, der ihn belegt bzw. nutzt, eine Entschädigung zahlen sollte: Hierfür wird im Adapter 2 jedesmal, wenn ein Terminal 16 einen Datensatz der Länge L (gemessen z.B. in byte) mit dem Schlüssel K und dem Verfallsdatum V erzeugt, in einem Register des Adapters 2 ein Belegungsbetrag $BB(K) = L * (V-D)$ ermittelt, worin D für das aktuelle Datum steht. Die Belegungsbeträge $BB(K)$ werden über einen Zeitraum gesammelt, und in einem Summenspeicher $SBB(K)$ akkumuliert. Der Inhalt des Summenspeichers wird regelmäßig abgefragt, weiterverarbeitet und zurückgesetzt, und dient als Maßzahl für die effektive Speicherplatzbelegung auf der Gesamtheit der umlaufenden Chip-Karten 1. Wird ein Datensatz vor dem Verfallsdatum gezielt gelöscht, findet im Adapter 2 eine Berechnug eines vorzeitigen Entfernungsbetrags BE(K) = L * (V-D) statt, der ebenfalls in einem Sumenspeicher SBE(K) abgelegt wird, und ebenfalls abgefragt und weiterverarbeitet wird. Der Saldo der beiden Summenspeicher, der vorzugsweise erst nach Abruf berechnet wird, gibt dann eine faire Bewertung der tatsächlichen Belegung der Chip-Karten wieder.

Es versteht sich, daß grundsätzlich alle bisherigen Automaten und Anbieterterminals, die auf der Basis von Münzeinwurf oder Bezahlung durch Kreditkarten arbeiten, mit einem erfindungsgemäßen Adapter ausrüstbar sind.

Ein besonderes Terminal in diesem Sinne ist ein sogenanntes Wallet, bei dem der Karten-Inhaber ungehindert, oder aber nach Eingabe eines Paßworts oder einer PIN, einen bestimmten, frei einsehbaren Teil der gespeicherten Daten betrachten kann (es sind also hier im Prinzip nur Mittel zum Lesen von Inhalten erforderlich). Der Hintergrund ist folgender: Einerseits steht dem Karteninhaber das Recht zu, sich jederzeit über die für ihn relevanten Daten informieren zu können, die in der Karte gespeichert sind. Wie oben beschrieben, handelt es sich ja oft sogar um geldwerte Ansprüche, wie z.B. der Busfahrschein, oder aber auch Boni bei Loyalty-Funktionen im Einzelhandel bzw. um einen ihn auszeichnenden Status (Student, Schüler, Behinderter, Anwohner, etc.). Diese Daten muß er entweder an aufgestellten Info-Terminals oder aber an tragbaren Lesegeräten, den Wallets, oder aber am Personal Computer, der mit einem erfindungsgemäßen Adapter versehen ist, lesen und vorzugsweise auch ausdrucken können, und soweit möglich in einem verständlichen Klartext. Dagegen sollen die anderen Daten, die den Inhaber einer Karte (oder gar jeden beliebigen Dritten) nichts angehen, nicht lesbar sein.

Dieses spezielle Problem wird dadurch gelöst, daß die Klartext-Daten zunächst beim Abspeichern in dem Datensatz besonders gekennzeichnet werden. Ein Klartextfeld könnte z.B. durch Sonderzeichen zu Beginn und Ende von den übrigen Daten abgegrenzt sein; alternativ wäre es möglich, durch einen Index im Datenfeld Länge und Lage des Klartextes anzuzeigen. Mittels einer im Adapter 2 vorgesehenen Schaltung ist es möglich, alle Klartextfelder, unabhängig von der zugrundeliegenden Kennung, über eine Wiedergabeeinheit, beispielseweise einen Bildschirm, wiederzugeben. Es wäre z.B. möglich, ein solches Terminal mit einem Drucker auszustatten, und auf Wunsch auch einen gebührenpflichtigen Ausdruck auszulösen. Es ist zwar am einfachsten, die Klartext-Inhalte der zweiten Speichermittel einer Chip-Karte 1 in der Reihenfolge ihrer physischen Abspeicherung auszugeben. Aufgrund der größeren Benutzerfreundlichkeit ist es jedoch bevorzugt, die Daten in der Reihenfolge ihrer Verfallsdaten aufzulisten, und dementsprechende Verfahrensschritte bei der Manipulation des Speicherbausteins vorzusehen.

Abschließend ist anzumerken, daß es neben Chip-Karten mit Kontaktierungsflächen auch solche gibt, die über eine eingefügte Antenne drahtlos mit der Adapter-Vorrichtung 2, die dann naturgemäß keiner Einlaßöffnung 8a bedarf, und somit mit einem Terminal kommunizieren können. Im Prinzip ist es möglich, auch solche Karten bzw. Adapter in der erfindungsgemäßen Weise auszugestalten bzw. zu betreiben; dem Fachmann sind die hierfür erforderlichen Äquivalente bekannt.

**Patentansprüche**

1. Adapter-Vorrichtung zum Manipulieren eines Speicherbausteins (4) einer Chip-Karte (1), und die als Einsatz in einem Terminal (16) für elektronische Zahlkartensysteme geeignet ist, umfassend

   - Mittel (12) zur Herstellung einer Datenaustausch-Verbindung mit dem Speicherbaustein (4);
   - ein Speicherelement (20), in dem ein Prozessor-Programm abgelegt ist; und
   - eine Spannungsversorgung (Ue), gekennzeichnet durch
   - mindestens einen im Speicherelement (20) abgelegten Schlüssel, mit dem auf zugeordnete, innerhalb des Speicherbausteins (4) der Chip-Karte (1) an speicherplatzmäßig nicht vorausbestimmten Stellen sowie möglicherweise nur vorübergehend enthaltene bzw. belegte Speichermittel zugegriffen werden kann.

2. Adapter-Vorrichtung nach Anspruch 1, mit

   - Mitteln zum Lesen von im Speicherbaustein (4) gespeicherten Inhalten; und
   - Mitteln zum Schreiben von Inhalten in den oder zum Löschen von Inhalten aus dem Speicherbaustein (4).

3. Adapter-Vorrichtung nach Anspruch 1 oder 2, bei der die Verbindungsherstellmittel eine berührende Datenaustausch-Verbindung mit den Kontaktierungsflächen (6) der Chip-Karte (1) definieren.

4. Adapter-Vorrichtung nach einem der Ansprüche 1 bis 3, bei der die Verbindungsherstellmittel mit einer Antenne einen berührungslosen Datenaustausch ermöglichen.

5. Adapter-Vorrichtung nach einem der Ansprüche 1 bis 4, bei der ein unterbrechbarer Sicherheitsschaltkreis (Ui, D, S1, S2, Z, A) vorgesehen ist, der von der Spannungsversorgung (Ue) gepuffert ist, und der nach einer Unterbrechung den Zugang zu dem Schlüssel im Speicherelement (20) außer Betrieb setzt.

6. Adapter-Vorrichtung nach Anspruch 5, soweit auf Anspruch 2 rückbezogen, bei der nach einer Unterbrechung der Spannungsversorgung auch die Mittel zum Lesen und/oder die Mittel zum Schreiben oder Löschen außer Betrieb gesetzt werden.

7. Adapter-Vorrichtung nach Anspruch 5 oder 6, bei der das Außerbetriebsetzen durch ein externes Kommando aufhebbar ist.

8. Adapter-Vorrichtung nach einem der Ansprüche 5 bis 7, bei der der Sicherheitsschaltkreis eine interne Spanungsversorgung (Ui) aufweist, die mittels eines zeitgesteuerten Schalters (S2) abschaltbar ist.

9. Adapter-Vorichtung nach Anspruch 8, bei der die innere Spannungsversorgung ein Akkumulator (A) ist.

10. Adapter-Vorrichtung nach Anspruch 8, bei der die innere Spannungsversorgung eine Batterie ist.

11. Adapter-Vorrichtung nach einem der Ansprüche 1 bis 10, bei der von dem Terminal (16) über eine Datenaustausch-Verbindung vorgegeben wird, welche Operationen Mittel zum Lesen oder Mittel zum Schreiben oder Mittel zum Löschen ausführen sollen, und die Operationen nur ausgeführt werden, wenn sie nach einer im Speicherelement (20) abgelegten Tabelle auch zulässig sind.

12. Adapter-Vorrichtung nach Anspruch 11, gekennzeichnet durch

- Komparatormittel mit einem ersten und einem zweiten Eingang, wobei dem ersten Eingang eine Abfragekennung zuführbar ist, und dem zweiten Eingang über die Kontaktierungsmittel und die Mittel zum Lesen eine Speicherkennung zuführbar ist, und mit einem Ausgang, der ein logisches JA-Signal abgibt, wenn eine Speicherkennung und die Abfragekennung übereinstimmen.

13. Adapter-Vorrichtung nach Anspruch 12, dadurch gekennzeichnet, daß die Abfragekennung und Speicherkennung als Binärzahlen dargestellt sind, und daß ein Vergleich jeder Stelle der Binärzahl vorgenommen wird.

14. Adapter-Vorrichtung nach Anspruch 12, dadurch gekennzeichnet, daß die Abfragekennung und Speicherkennung als Binärzahlen dargestellt sind, und daß ein Vergleich nur einiger der Stellen der Binärzahl vorgenommen wird.

15. Adapter-Vorrichtung nach einem der Ansprüche 1 bis 14, bei der ein Zeit-Komparatormittel vorgesehen ist mit einem ersten und einem zweiten Eingang, wobei dem ersten Eingang eine Real-Zeit zugeführt wird und dem zweiten Eingang der Inhalt eines Verfallsdatums-Feldes aus dem Speicherbaustein zugeführt wird, der eine Information über einen Verfallszeitpunkt enthält, und mit einem Ausgang, der ein JA-Signal abgibt, wenn der Verfallszeitpunkt vor der Real-Zeit liegt.

16. Adapter-Vorrichtung nach einem der Ansprüche 1 bis 15, dadurch gekennzeichnet, daß sie an eine Wiedergabeeinheit angeschlossen ist, und daß ausgewählte Bereiche des Speicherbausteins (4) der Chip-Karte (1) von der Wiedergabeeinheit angezeigt werden.

17. Adapter-Vorrichtung nach einem der Ansprüche 1 bis 16, dadurch gekennzeichnet, daß Mittel zur Speicherung eines für die Änderung der Belegung des Speicherplatzes der Chip-Karten (1) repräsentativen Wertes vorgesehen sind.

18. Adapter-Vorrichtung nach Anspruch 17, bei der die Belegung des Speicherplatzes als Produkt der Länge eines neuen Datensatzes und des Zeitraums der Gültigkeit des Datensatzes berechnet wird.

19. Anbieterterminal für Erwerb von Waren und/oder Dienstleistungen mittels einer elektronischen Geldbörse (1), die zusätzlich zu dem Bonitätsspeichermitteln Zusatz-Speichermittel für andere Daten aufweist, mit einer Adapter-Vorrichtung (2) nach einem der Ansprüche 1 bis 18, die in Datenaustauschverbindung mit den Zusatz-Speichermitteln bringbar ist und mit Mitteln zum Lesen, Löschen und Schreiben des Zusatzspeichers, wobei der Adapter (2) jedoch so programmiert ist, daß in Abhängigkeit von der Art des Terminals nur ausgewählte dieser Mittel und nur bezüglich ausgewählter Speicherplätze im Zusatzspeicher aktivierbar sind.

20. Verfahren zum Manipulieren eines Speicherbausteins (4) mit beschreibbaren Speichermitteln einer Chip-Karte (1) mit einer die Information adressierenden Kennung, gekennzeichnet durch die folgenden Schritte:

(a) Prüfen, ob Informationen mit der Kennung bereits in den Speichermitteln gespeichert sind;
(b) Falls das Prüfungsergebnis positiv ist: Lesen der Informationen, Berechnen einer resultierenden Information, Überschreiben der unter der Kennung gespeicherten Information durch die resultierende Information.

21. Verfahren nach Anspruch 20, gekennzeichnet durch die folgenden Schritte im Anschluß an Schritt (b):

> (c) Prüfen, ob die Speichermittel ausreichend Platz zum Schreiben einer weiteren Information aufweisen;
> (d) Falls der Platz ausreicht, Speichern der Information in dem ersten freien Speicherplatz.

22. Verfahren nach Anspruch 20 oder 21, gekennzeichnet durch die folgenden Schritte vor einem der Schritte (a) bis (d):

> (e) Lesen und Vergleich eines in jeder Information gespeicherten Verfallszeitpunkts mit der Real-Zeit;
> (f) Löschen aller Information, deren Verfallsdatum überschritten ist.

23. Verfahren nach Anspruch 21, gekennzeichnet durch die folgenden Schritte im Anschluß an Schritt (c):

> (g) Falls der Platz zum Schreiben nicht ausreicht, Löschen von Informationen mit überschrittenem Verfallsdatum, bis der Platz zum Schreiben ausreicht.

**Fig. 1**

**Fig. 2**

**(a)**

feste Feldlänge

| Datensatz |
|---|
| Datensatz |
| Datensatz |

**(b)**

gestufte Feldlänge

Datensatz

Datensatz

Datensatz

**(c)**

variable
Feldlänge

Datensatz

Datensatz

Datensatz

**(d)**

Datei mit Datenfeldern

Inhaltsverzeichnis

| K1 | V1 | |
| K2 | V2 | |
| | | |
| | | |

Zeiger

Einfacher Satz K1

Kopffeld zu Satz K2

Folgefeld zu Satz K2

letztes Folgefeld zu Satz K2

**(e)**

Datei mit Datenfeldern

| | H | K1 | V1 | |
| | H | K2 | V2 | |
| | H | | | |
| | | | | |
| | | | | |
| | H | | | |

Einfacher Satz K1

Kopffeld zu Satz K2

Folgefeld zu Satz K2

letztes Folgefeld zu Satz K2

**Fig. 3**

13

D    A

$U_e$

S1                                    S2

Z

E

$U_i$

Fig. 5

12

9

13    20

10    11

8    2

16

15

8a    Fig. 4

Fig. 6